Europäisches Patentamt

European Patent Office

Office européen des brevets

(19)

(11) Numéro de publication : **0 077 265**
**B1**

(12)                     **FASCICULE DE BREVET EUROPÉEN**

(45) Date de publication du fascicule du brevet :
24.04.85

(21) Numéro de dépôt : 82401839.4

(22) Date de dépôt : 07.10.82

(51) Int. Cl.⁴ : **F 01 D  5/08**, F 02 C  7/18

(54) **Dispositif pour contrôler les dilatations et les contraintes thermiques dans un disque de turbine à gaz.**

(30) Priorité : 14.10.81 FR 8119293

(43) Date de publication de la demande :
20.04.83 Bulletin 83/16

(45) Mention de la délivrance du brevet :
24.04.85 Bulletin 85/17

(84) Etats contractants désignés :
DE FR GB

(56) Documents cités :
FR-A-   845 966
FR-A- 2 290 574
GB-A-   621 300
US-A- 2 791 091
US-A- 2 973 937
US-A- 3 034 298
US-A- 3 437 313
US-A- 3 584 458
US-A- 4 217 755

(73) Titulaire : **SOCIETE NATIONALE D'ETUDE ET DE
CONSTRUCTION DE MOTEURS D'AVIATION,
"S.N.E.C.M.A."
2 Boulevard Victor
F-75015 Paris (FR)**

(72) Inventeur : **Hallinger, Claude Christian
219, avenue de la Libération
F-77350 Le Mée sur Seine (FR)**
Inventeur : **Kervistin, Robert
215, rue Aristide Briand
F-77350 Le Mée sur Seine (FR)**

(74) Mandataire : **Moinat, François
S.N.E.C.M.A. Service des Brevets Boîte Postale 81
F-91003 Evry Cedex (FR)**

Jouve, 18, rue St-Denis, 75001 Paris, France

## Description

La présente invention concerne un dispositif pour contrôler à la fois les dilatations et les contraintes thermiques dans un disque de turbine à gaz.

On connaît déjà différents procédés pour conditionner thermiquement les disques de turbine à gaz.

Le brevet français n° 1 593 039 déposé le 27 septembre 1968 par la Société Anonyme BENNES MARREL, décrit différents types de dispositifs pour le refroidissement d'une turbine à gaz ; de l'air froid, provenant du compresseur, est dirigé vers la jante du disque par un conduit approprié débouchant au niveau d'un joint situé en regard de ladite jante ; de l'air chaud est prélevé au niveau du distributeur associé à ce disque ; une partie de cet air chaud est envoyée directement sur la partie externe de la jante du disque, le reste de l'air chaud étant mélangé avec l'air froid sortant du joint précédemment mentionné ; de l'air froid prélevé dans le compresseur est amené dans une chambre annulaire interposée entre les faces en regard de deux disques de la turbine ; la paroi circonférentielle interne de cette chambre comporte des perforations débouchant dans deux autres chambres annulaires, séparées par une cloison sensiblement radiale, de manière que l'air froid s'échappant desdites chambres annulaires vienne balayer les deux faces en regard des disques ; l'autre face du second disque est elle-même balayée par un courant d'air résultant du mélange d'air atmosphérique avec de l'air ayant circulé au contact du conduit d'échappement. Toutes ces dispositions, plus ou moins hétéroclites, utilisent de l'air chaud et/ou de l'air froid de diverses provenances, mélangés ou non, pour conditionner thermiquement la jante d'un ou plusieurs disques de turbine à gaz. Les divers moyens décrits ne permettent visiblement pas de conditionner systématiquement en température chaque disque de la turbine à gaz, notamment à des instants prédéterminés de son cycle de fonctionnement.

La demande de brevet français n° 2 290 574, déposée le 5 novembre 1974, décrit un groupe à turbines à gaz comportant, de part et d'autre d'un même disque, deux plaques perforées derrière lesquelles est envoyé un mélange de deux flux d'air respectivement chaud et froid arrivant par des canalisations distinctes ; les mélanges d'air qui sortent des perforations distinctes ; les mélanges d'air qui sortent des perforations des tôles mentionnées viennent lécher les faces opposées du disque au voisinage de sa jante.

Les brevets français de la Demanderesse, n° 2 280 791 et 2 467 292 décrivent des dispositifs pour régler automatiquement le jeu entre les aubes du rotor d'une turbine à gaz et la paroi en regard de son stator ; ce réglage est obtenu en dirigeant sur la face externe de la paroi du stator, des jets d'air de chauffage ou de refroidissement dont la température a été ajustée de façon appropriée. Ces jets d'air de conditionnement thermique ne parviennent pas au contact des aubes du rotor, ni au contact de son disque.

Parmi les divers procédés connus pour le conditionnement thermique des disques de turbine à gaz, le plus efficace est certainement le procédé qui consiste à faire frapper l'une au moins des deux faces du disque par des jets d'air, comme cela résulte de l'article publié par Metgzer et Grochowsky dans le « Journal of Heat Transfer » (novembre 1977, volume 99, pages 663-667);

Le but principal de la présente invention est de contrôler les dilatations et les contraintes thermiques qui apparaissent dans un disque de turbine à gaz en raison de son inertie thermique, notamment dans les phases transitoires du fonctionnement de la turbine ; en effet, à chaque phase d'accélération de la turbine, le disque de son rotor se dilate beaucoup plus lentement que les aubes dudit rotor et le carter du stator qui les entoure ; il en résulte un accroissement relativement important du jeu entre les aubes et le stator et, par suite, une réduction des performances de la machine. En phase de décélération, en revanche, le disque du rotor se contracte plus lentement que le stator, ce qui conduit à prévoir au montage un jeu important (ou, ce qui revient au même, une augmentation de jeu en transitoire par usure de l'abradable) ; l'un ou l'autre de ces facteurs a pour conséquence un jeu excessif, en fonctionnement stabilisé, qui réduit les performances de la machine.

GB-A-621 300 propose une disposition visant également à réduire les contraintes thermiques dans un disque de turbine à gaz en équilibrant les températures entre l'alésage et la périphérie du disque. Toutefois, les moyens proposés prévoyant une arrivée d'air de refroidissement vers la périphérie du disque et un réchauffement de son centre par une circulation due uniquement aux pertes semblent insuffisants pour certaines applications. En particulier, aucune modulation n'est prévu en fonction des phases de fonctionnement de la turbine. En outre les arrivées d'air uniquement ponctuelles sans répartition peuvent produire une efficacité insuffisante des échanges thermiques.

Le dispositif selon la présente invention, pour contrôler les dilatations et les contraintes thermiques dans un disque de turbine à gaz, comporte des moyens connus pour faire frapper l'une au moins des deux faces du disque par des jets d'air ; il comporte des tôles perforées montées à faible distance en regard de certaines régions d'une face au moins du disque, notamment en regard de sa jante et autour de sa partie interne épaisse ; il est caractérisé par le fait que des moyens sont prévus pour prélever de l'air froid et de l'air chaud dans des étages précédents du compresseur ou de la turbine et permettre la commutation des prélèvements pour injecter, à travers les tôles perforées correspondantes, au début de chaque accélération, de l'air froid vers la jante du disque et de l'air chaud vers sa partie interne épaisse et, lors de chaque décélération, de l'air chaud vers ladite jante et de l'air froid vers ladite partie interne, le nombre, la distribution et les dimensions des perforations d'injection d'air étant choisis de façon à réduire le plus possible dans chaque phase de fonctionnement le gradient de température dans la direction radiale de la face correspondante du disque.

Le dispositif selon la présente invention permet donc, en phase d'accélération de la turbine, de ralentir la dilatation de la jante du disque, tout en accélérant celle de sa partie interne épaisse, et, lors de chaque décélération, de ralentir la contraction de sa jante tout en accélérant celle de sa partie interne ; ceci permet, dans chaque régime transitoire de fonctionnement de la turbine, de réduire le plus possible le gradient de température dans la direction radiale du disque de façon à réduire, sinon supprimer, les contraintes thermiques pouvant résulter d'un tel gradient. Il en résulte évidemment un accroissement de la durée de vie du disque, mais aussi la possibilité de prévoir, en régime de fonctionnement stable, un jeu le plus possible réduit entre les aubes du rotor et le stator, de façon à améliorer les performances de la turbine.

Dans une forme de réalisation préférée du dispositif selon la présente invention, une chambre de distribution est aménagée sur la face de certaines au moins des tôles perforées, qui est opposée au disque ; cette chambre de distribution peut être divisée, par des cloisons de direction sensiblement circonférentielle, en plusieurs chambres indépendantes, échelonnées dans la direction radiale du disque et alimentées respectivement avec des flux d'air de températures différentes. Au moins une tôle perforée fixe peut être montée en regard de chaque face de la jante du disque de façon à contrôler le gradient thermique sur ses deux faces. Par ailleurs, des tôles perforées, enveloppant la partie interne épaisse dudit disque, peuvent être montées de façon à être solidaires de ce dernier ; dans cette forme de réalisation, les tôles perforées peuvent être alimentées en air à partir de l'intervalle entre le tambour de compresseur et le tube central traversant l'alésage du disque.

A titre d'exemple, on a décrit ci-dessous et illustré schématiquement au dessin annexé, une forme de réalisation préférée de l'invention.

La figure 1 représente une coupe, par un demi-plan axial, d'un disque de turbine à gaz, auquel est associée cette forme de réalisation de l'invention.

La figure 2 est un diagramme illustrant l'évolution des contraintes thermiques dans le disque de la figure 1 au cours d'une phase d'accélération et d'une phase de décélération de la turbine.

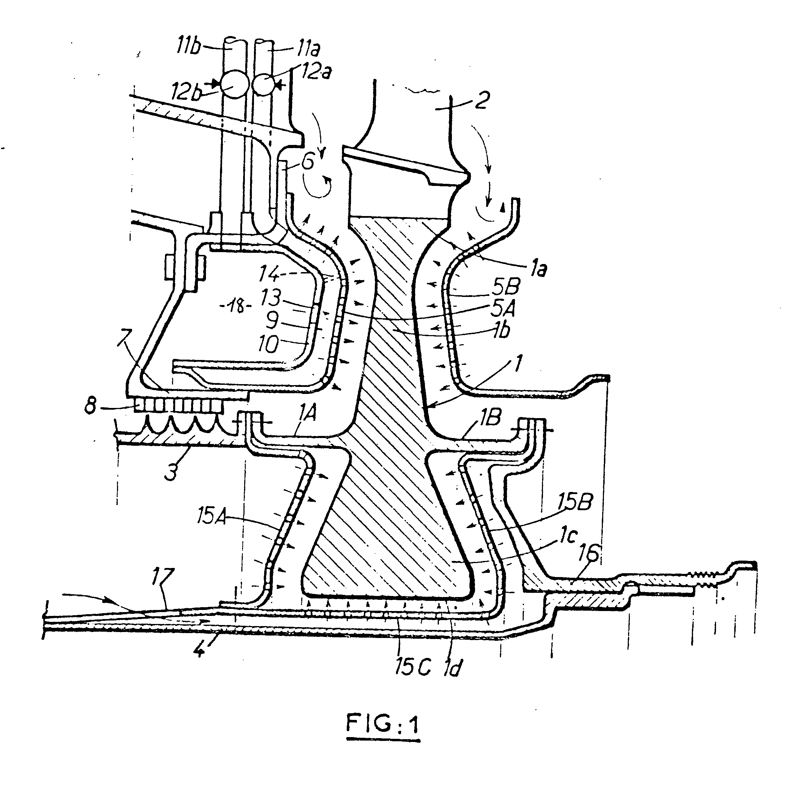

Sur la figure 1, le repère 1 désigne un disque d'une turbine à gaz ; on a désigné par 1a la jante de ce disque, sur le pourtour de laquelle est assujettie une rangée d'aubes telle que 2, par 1b le voile du disque 1 et, par 1c, sa partie interne épaisse, encore appelée « poireau ». Dans la forme de réalisation de la turbine à gaz illustrée à titre d'exemple, le poireau 1c est engagé dans l'intervalle entre le tambour de compresseur 3 et le tube central 4 qui traverse l'alésage 1d du disque 1 ; celui-ci comporte d'autre part deux brides circonférentielles, 1A et 1B, qui permettent sa fixation par tous moyens appropriés, notamment par des boulons, aux pièces 3 et 4 respectivement.

Selon la présente invention, deux tôles perforées, 5A et 5B, sont fixées en regard des deux faces de la jante 1a et du voile 1b du disque 1 ; chacune de ces tôles perforées a en fait la forme d'une gouttière annulaire, dont la section par un demi-plan axial a la forme visible sur la figure 1 adaptée à la forme, dans le même plan, de la face correspondante des parties 1a et 1b du disque 1, de manière à laisser subsister entre les parties perforées de la tôle 5A par exemple et la face la plus proche du disque 1, un intervalle annulaire sensiblement de largeur uniforme. D'autre part, chacune des tôles perforées, en forme de gouttières annulaires, 5A et 5B, est fixée à des pièces fixes de la turbine ; la tôle perforée 5A est notamment fixée, par son bord le plus externe, au support 6 du distributeur associé au disque 1, tandis que sa partie la plus interne est fixée au support 7 d'un joint-labyrinthe 8.

Selon une autre caractéristique de la présente invention, une chambre de distribution est aménagée sur la face de la tôle perforée 5A qui est opposée au disque 1. Dans la forme de réalisation considérée, cette chambre de distribution 9, dont une paroi est constituée par la tôle perforée 5A, est en outre délimitée par une seconde tôle 10, également annulaire et de section transversale adaptée à celle de la tôle perforée 5A, de façon à conférer à ladite chambre 9 une dimension sensiblement régulière dans toutes les directions perpendiculaires aux deux parois 5A et 10. En outre, dans cette forme de réalisation, la chambre de distribution 9 est alimentée en air à partir de deux conduites, l'une, 11a, amenant de l'air froid par exemple en provenance d'un étage approprié du compresseur (non représenté), tandis que l'autre conduite, 11b, amène de l'air chaud par exemple en provenance de l'un des étages antérieurs de la turbine elle-même. Des valves, 12a et 12b, commandées par un automatisme non représenté, sont insérées dans les conduites 11a et 11b respectivement, de manière à contrôler les débits respectifs des fluides qui les traversent ; l'air chaud, par exemple, est amené par la conduite 11b dans un espace 18 extérieur à la chambre 9 et délimité par la tôle perforée en forme de gouttière 10 tandis que l'air froid est amené par la conduite 11a dans la chambre de distribution 9, où l'air chaud pénètre également par des orifices tels que 13 ; l'air chaud et l'air froid se mélangent donc dans la chambre de distribution 9 avant d'en sortir par les perforations de la plaque 5A, sous la forme de jets d'air à température contrôlée, qui viennent frapper les parties en regard de la face la plus proche du disque 1, c'est-à-dire notamment de sa jante 1a et de son voile 1b. Une disposition analogue peut être prévue pour alimenter en air l'autre face du disque 1, à travers les perforations de la tôle 5B ; plus simplement, comme on l'a représenté sur la figure 1, il est possible de renoncer à l'aménagement d'une chambre de distribution, la tôle perforée 5B, en forme de gouttière annulaire, étant alimentée directement par exemple par au moins une dérivation (non représentée) de chacune des conduites 11a et 11b.

A titre de variante, la chambre de distribution 9 peut être divisée par des cloisons de direction sensiblement circonférentielle, telle que celle représentée en pointillés sur la figure 1 et désignée par 14, en plusieurs chambres indépendantes, notamment en deux chambres indépendantes, échelonnées dans la direction radiale du disque 1, la chambre la plus extérieure étant alimentée directement par la conduite 11a, tandis que la chambre la plus intérieure est alimentée par la conduite 11b, par l'intermédiaire des perforations telles que 13. On comprend que cette disposition permet de diriger des flux d'air de températures différentes respectivement vers la jange 1a et vers le voile 1b du disque 1.

Selon une autre caractéristique de l'invention, des tôles perforées 15A, 15B et 15C sont montées de façon à envelopper la partie interne épaisse, ou poireau, 1c, du disque 1, en ménageant autour dudit poireau des espaces libres de largeur sensiblement uniforme dans la direction perpendiculaire à la tôle perforée correspondante. Dans la forme de réalisation illustrée sur la figure 1, la tôle perforée 15A est en forme de gouttière annulaire peu profonde et elle est disposée de façon que sa partie perforée soit sensiblement parallèle à la face correspondante du poireau 1c ; le bord le plus externe de la tôle perforée 15A forme une sorte de bride dans un plan perpendiculaire à l'axe de la turbine et cette bride est serrée par exemple par des boulons, non représentés, entre d'une part l'extrémité de même conformation de la bride circonférentielle 1A du disque d'une part, et d'autre part une bride de même conformation aménagée à l'extrémité du tambour de compresseur 3. Les tôles perforées 15B et 15C sont, dans cet exemple de réalisation, d'une seule pièce, qui est réalisée de façon à présenter deux parties perforées, l'une, 15B, sensiblement parallèle à la face correspondante du poireau 1c et l'autre, 15C, sensiblement parallèle à la base du poireau, c'est-à-dire à l'alésage 1d du disque 1 ; bien entendu, la pièce de tôle 15B-15C est de forme annulaire ; son bord le plus externe présente une bride dans un plan perpendiculaire à l'axe de la turbine, cette bride étant serrée, comme celle de la tôle perforée 15A, entre l'extrémité, conformée de façon correspondante, de la bride circonférentielle, 1B, du disque 1 d'une part et, d'autre part, une bride de même conformation, aménagée au bord le plus externe d'une pièce 16, solidaire de l'extrémité du tube central 4, traversant l'alésage 1d. Au-delà de sa partie perforée 15C, la pièce de tôle est fixée, par exemple, par des boulons non représentés, au bord le plus interne de la tôle perforée 15A ; au-delà de ce point de fixation, la tôle perforée 15C est prolongée par un élément tronconique, qui converge vers la gauche de la figure 1, et dans lequel sont aménagées des lumières 17 ; l'extrémité de ce prolongement de la tôle perforée 15C, qui se trouve en dehors de la figure 1 vers la gauche, est fixée, par tous moyens appropriés, à la région correspondante du tube central 4, lequel traverse l'alésage 1d du disque 1, à une distance sensiblement uniforme de la tôle perforée 15C. Des moyens connus, non représentés, qui peuvent être analogues à ceux précédemment décrits et désignés par les références 11a, 11b, 12a, 12b, permettent d'envoyer à volonté de l'air froid, de l'air chaud ou un mélange d'air chaud et d'air froid, à une température ajustée, dans l'intervalle annulaire entre le tambour de compresseur 3 et le prolongement tronconique de la tôle perforée 15C ; une fraction de ce flux d'air s'échappe de l'espace annulaire précédemment mentionné à travers les perforations de la tôle 15A, en formant autant de jets d'air qui viennent frapper la face correspondante du poireau 1c. Le reste du flux d'air pénètre, par les lumières telles que 17, dans l'intervalle annulaire étroit entre le tube central 4 et la tôle perforée 15C ; une première fraction du flux d'air qui a traversé les lumières 17 s'échappe de l'intervalle annulaire mentionné à travers les perforations de la tôle 15C, sous la forme d'autant de jets d'air qui viennent frapper la surface interne, cylindrique, de l'alésage 1d, du disque 1, tandis qu'une seconde fraction du même flux d'air pénètre dans l'intervalle entre la tôle perforée 15B et la partie correspondante de la pièce 16, qui forme une chambre de distribution analogue à la chambre 9, précédemment mentionnée, et de laquelle ladite seconde fraction du flux d'air s'échappe par les perforations de la tôle 15B, sous la forme d'autant de jets d'air qui viennent frapper la face correspondante du poireau 1c.

Selon la présente invention, le nombre, la distribution, notamment dans la direction radiale, ainsi que les dimensions des perforations d'injection d'air dont sont pourvues les tôles 5A, 5B, 15A, 15B et 15C sont choisis de façon à réduire le plus possible le gradient de température dans la direction radiale de la face correspondante du disque, c'est-à-dire de la face correspondante de sa jante 1a et de son voile 1b, pour les tôles perforées 5A et 5B, et de son poireau 1c, pour les tôles perforées 15A, 15B et 15C. On conçoit en effet que le refroidissement ou l'échauffement d'une partie déterminée du disque se trouve sous l'influence non seulement de la température des jets d'air qui frappent ladite région, mais aussi sous celle du nombre de ces jets et de leurs débits respectifs, qui dépendent notamment des dimensions des perforations des tôles correspondantes.

Le mode de fonctionnement du dispositif selon la présente invention, qui vient d'être décrit, est le suivant : au début de chaque phase d'accélération de la turbine, la valve 12b est fermée et l'automatisme mentionné précédemment ouvre temporairement la valve 12a, de façon à permettre l'envoi d'air froid, prélevé dans une étage du compresseur, par la conduite 11a, dans la chambre de distribution 9, d'où elle s'échappe par les perforations de la tôle 5A, sous la forme de jets d'air de refroidissement, qui viennent frapper les faces gauches (sur la figure 1) des pieds des aubes tels que 2, ainsi que de la jante 1a et du voile 1b du disque 1 ; en même temps, des moyens analogues à ceux qui viennent d'être indiqués permettent de faire frapper la face droite des mêmes éléments du disque 1 par des jets d'air de refroidissement, sortant des perforations de la tôle 5B. Des moyens comparables, qu'il n'est donc pas nécessaire de décrire en détail, permettent d'envoyer simultanément de l'air chaud, ou bien un mélange d'air chaud et d'air froid à une température prédéterminée, dans l'espace annulaire entre le tambour de compresseur 3 et le prolongement tronconique de la tôle perforée 15C vers la gauche de la figure 1 ; il en résulte que des jets d'air de réchauffage, de température appropriée, viennent frapper respectivement les faces droite et gauche du poireau 1c du disque 1, ainsi que la face interne de son alésage 1d, à travers les perforations des tôles 15A à 15C.

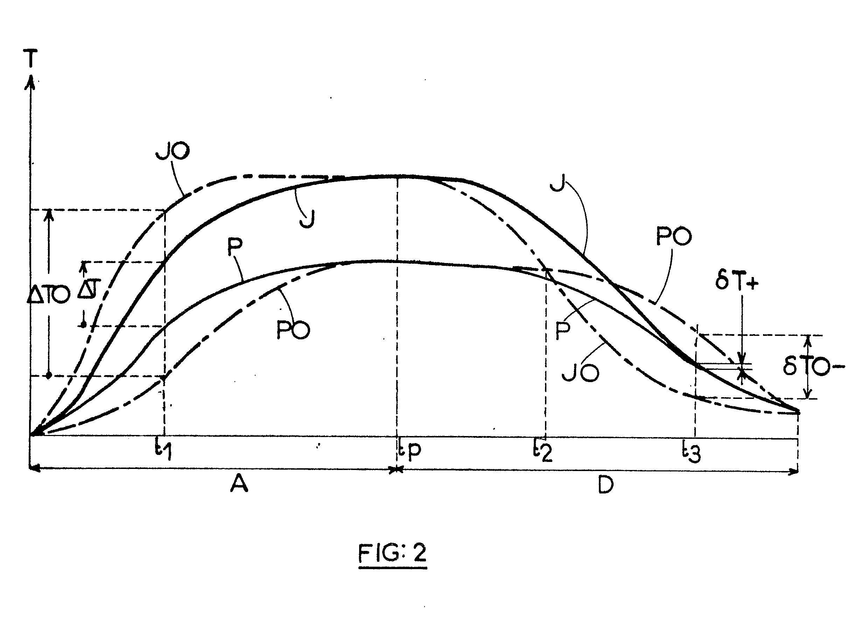

Sur le diagramme de la figure 2, on a porté en ordonnées la température T de certaines parties du disque 1 à des instants déterminés t du cycle de fonctionnement de la turbine. L'intervalle de temps A correspond à une phase d'accélération de la turbine, et l'intervalle de temps D, à une phase de décélération. Les courbes en traits mixtes $J_0$ et $P_0$ représentent respectivement les variations de la température des zones 1a et 1b du disque 1, d'une part, et de sa partie interne épaisse 1c, d'autre part, dans l'hypothèse où le dispositif de contrôle thermique selon la présente invention n'est pas utilisé. Les courbes en trait plein, J et P, sont obtenues au contraire lorsque le dispositif de contrôle thermique précédemment décrit est utilisé notamment, au début de chaque phase d'accélération, pour refroidir les parties 1a et 1b du disque 1 et réchauffer sa partie interne 1c. On voit que, à un instant $t_1$ de la phase d'accélération A, l'intervalle de température $\Delta T$ entre les points correspondants des courbes J et P est notablement inférieur à l'intervalle de température correspondant $\Delta T_0$ entre les courbes $J_0$ et $P_0$ qui seraient obtenues si le dispositif de contrôle thermique selon la présente invention n'était pas utilisé. Son emploi assure donc une importante réduction des dilatations et des contraintes thermiques auxquelles sont soumises les différentes régions du disque 1 et, par suite, un accroissement de sa durée de vie ; il en résulte également la possibilité de prédéterminer le jeu entre les extrémités des aubes telles que 2 portées par le disque 1 de la turbine, d'une part, et le stator correspondant, d'autre part, en phase d'accélération, alors que, en l'absence du dispositif de contrôle selon la présente invention, ce jeu ne peut pas être contrôlé en régime de fonctionnement transitoire de la turbine ; cette dernière possibilité permet de dimensionner au plus juste le jeu mentionné et, par suite, de faire toujours fonctionner la turbine dans des conditions optimales du point de vue de ses performances.

Si on suppose que, à l'instant $t_p$ (figure 2) la turbine est parvenue à un régime permanent de fonctionnement, et qu'une phase de décélération D commence à ce même instant, le dispositif de contrôle thermique selon la présente invention, qui a été précédemment décrit, est aussitôt commuté par l'automatisme déjà mentionné, notamment de manière à ouvrir la valve 12b, la valve 12a restant fermée ; c'est alors de l'air chaud qui pénètre à l'intérieur de la chambre annulaire délimitée de trois côtés par la tôle 10, cet air chaud passant par les ouvertures telles que 13 dans la chambre de distribution 9, dont il sort ensuite par les perforations de la tôle 5A, sous la forme de jets qui viennent frapper les régions correspondantes des éléments 2, 1a et 1b du disque 1, de façon à les réchauffer ; des moyens analogues alimentent la tôle perforée 5B avec de l'air chaud. Des moyens analogues également font parvenir dans l'intervalle annulaire entre le tambour de compresseur 3 et le prolongement tronconique de la tôle perforée 15C, un flux d'air froid, qui vient frapper les trois faces du poireau 1c du disque 1, à travers les perforations des tôles 15A, 15B et 15C sous la forme d'autant de jets d'air de refroidissement. Bien entendu, au lieu d'envoyer par exemple pour alimenter la chambre de distribution 9, de l'air chaud prélevé dans un étage antérieur de la turbine, ou bien dans le distributeur de son étage considéré, il est possible d'envoyer en même temps dans ladite chambre de distribution 9, de l'air froid prélevé dans le compresseur par la conduite 11a ; il suffit pour cela que l'automatisme ouvre simultanément les valves 12a et 12b et contrôle leurs débits respectifs de façon que le mélange d'air de réchauffage formé dans la chambre de distribution 9, présente une température prédéterminée.

Sur la partie droite du diagramme de la figure 2, on a fait figurer pour la phase de décélération qui commence à l'instant $t_p$ auquel la turbine se trouvait en régime permanent de fonctionnement les courbes $J_0$ et $P_0$ qui peuvent être relevées lorsqu'il n'y a pas le dispositif de contrôle thermique selon la présente invention. Ces courbes ont une allure telle que la courbe $J_0$ plonge au-dessous de la courbe $P_0$ à partir d'un instant $t_2$ ; ceci se traduit par une inversion du sens des contraintes thermiques auxquelles est soumis l'ensemble du disque 1 ; le diagramme de la figure 2 montre à un instant $t_3$ de la phase de décélération D, postérieur à l'instant $t_2$, la différence de température $\delta T_0^-$ entre le poireau 1c et la jante 1a du disque 1, cette différence étant bien de signe contraire à sa valeur $\Delta T_0$ de l'instant $t_1$ de la phase d'accélération A (sans la présente invention) ; on voit aussi que le dispositif de contrôle thermique selon la présente invention permet de réduire de façon très importante l'amplitude des contraintes thermiques négatives $\delta T_0$ (courbes $P_0$ et $J_0$) ou mieux de les rendre positives ($\delta T$ nouvelles courbes J et P) ; comme des contraintes alternées sont particulièrement préjudiciables à la bonne tenue d'un disque de turbine, on comprend que le dispositif selon la présente invention permet d'accroître considérablement la durée de vie d'un tel disque.

La présente invention n'est pas limitée aux formes de réalisation précédemment décrites. Elle englobe toutes leurs variantes. Dans certaines applications, il peut être suffisant de conditionner thermiquement une seule face du disque, au moyen de tôles perforées montées au voisinage de cette seule face du disque. Quelles que soient les différences entre les contraintes thermiques qui apparaissent dans le disque, respectivement au voisinage de ses deux faces, il est toujours possible d'ajuster les actions locales de réchauffage et de refroidissement sur les deux faces du disque ou sur une seule face de celui-ci, de manière que les différences mentionnées entre les contraintes thermiques superficielles ne se traduisent pas par un fléchissement ou un flambement du disque, c'est-à-dire de manière à parvenir à ce que son plan médian reste toujours rigoureusement perpendiculaire à l'axe de la turbine.

**Revendications**

1. Dispositif pour contrôler à la fois les dilatations et les contraintes thermiques dans un disque (1) de turbine à gaz, comportant des moyens pour faire frapper l'une au moins des deux faces du disque (1) par des jets d'air, et comportant des tôles perforées (5A, 5B, 15A, 15B, 15C), montées à faible distance en regard de certaines régions (1a, 1b, 1c) d'une face au moins du disque (1) notamment en regard de sa jante (1a) et autour de sa partie interne épaisse (1c), caractérisé en ce que des moyens (11a, 11b, 12a, 12b) sont prévus pour prélever de l'air froid et de l'air chaud dans différents étages du compresseur ou de la turbine et permettre la commutation des prélèvements pour injecter, à travers les tôles perforées correspondantes (5A, 5B, 15A, 15B, 15C) au début de chaque accélération de l'air froid vers la jante (1a) du disque et l'air chaud vers sa partie interne épaisse (1c) et lors de chaque décélération, de l'air chaud vers ladite jante (1a) et de l'air froid vers ladite partie interne (1c). le nombre, la distribution et les dimensions des perforations d'injection d'air étant choisies de façon à réduire le plus possible dans chaque phase de fonctionnement le gradient de température dans la direction radiale de la face correspondante du disque (1).

2. Dispositif selon la revendication 1, caractérisé en ce qu'une chambre de distribution (9) est aménagée sur la face de certaines au moins des tôles perforées (5A, 5B, 15A, 15B, 15C) qui est opposée au disque (1).

3. Dispositif selon la revendication 2, caractérisé en ce que la chambre de distribution (9) aménagée derrière la tôle perforée (5A) est divisée, par des cloisons (14) de direction sensiblement circonférentielle, en plusieurs chambres indépendantes, échelonnées dans la direction radiale du disque, et alimentées respectivement avec des flux d'air de température différentes.

4. Dispositif selon l'une quelconque des revendications 1 à 3, caractérisé en ce qu'au moins une tôle perforée fixe (5A ou 5B) est montée en regard de chaque face de la jante (1a) du disque (1).

5. Dispositif selon l'une quelconque des revendications 1 à 4, caractérisé en ce que des tôles perforées (15A, 15B, 15C), enveloppant la partie interne épaisse (1c) du disque (1), sont montées de façon à être solidaires de ce dernier, et sont alimentées en air à partir de l'intervalle entre le tambour de compresseur (3) et le tube central (4) traversant l'alésage (1d) du disque (1).

**Claims**

1. Device for simultaneously controlling thermal expansion and contraction in a disc (1) of a gas turbine, incorporating means for having at least one of the two faces of the disc (1) struck by jets of air, and incorporating perforate plates (5A, 5B, 15A, 15B, 15C) mounted at a short distance opposite certain regions (1a, 1b, 1c) of at least one face of the disc (1) notably opposite its rim (1a) and around its thick inner part (1c) characterized in that means (11a, 11b, 12a and 12b) are provided for taking up cold and hot air in different stages of the compressor or the turbine and to permit the adaptation of these flows for injecting, through the corresponding perforate plates (5A, 5B, 15A, 15B, 15C) at the start of each acceleration, cold air towards the rim (1a) of the disc and hot air towards its thick inner part (1c) and on each deceleration, hot air towards the said rim (1a) and cold air towards the said thick inner part (1c), the number, the distribution and the dimensions of the perforations for injecting the air being chosen in such a way as to reduce as far as possible at each phase of operation the temperature gradient in a radial direction on the corresponding face of the disc.

2. Device in accordance with claim 1, characterized in that a distribution chamber (9) is provided on the face of at least certain of the perforate plates (5A, 5B, 15A, 15B, 15C) which is placed opposite the disc (1).

3. Device in accordance with claim 2, characterized in that the distribution chamber (9) placed behind the perforated plate (5A) is divided, by partitions (14) of a substantially circumferential direction, in several independent chambers, arranged in the radial direction of the disc and supplied respectively with air flows of different temperatures.

4. Device in accordance with any one of claims 1 to 3 characterized in that at least one fixed perforate plate (5A or 5B) is mounted opposite each face of the arm (1a) of the disc (1).

5. Device in accordance with any one of claims 1 to 4 characterized in that the perforate plates (15A, 15B, 15C) enclosing the thick inner part (1c) of the disc (1) are mounted in such a way as to be rigid with the latter and are supplied with air derived from the space between the drum of the compressor (3) and the central tube (4) passing through the bore (1d) of the disc (1).

**Patentansprüche**

1. Kontrollvorrichtung für die Dehnungen und thermischen Spannungen in einer Gasturbinenrotorscheibe (1), mit einer Einrichtung zum Beaufschlagen von mindestens einer der beiden Seiten der Scheibe (1) durch Luftstrahlen, und mit gelochten Blechen (5A, 5B, 15A, 15B, 15C), die in geringem Abstand gegenüber bestimmten Bereichen (1a, 1b, 1c) mindestens einer Seite der Scheibe (1), insbesondere gegenüber ihrem Nabenkranz (1a) und um ihrenverdickten Innenabschnitt (1c) angebracht sind, dadurch gekennzeichnet, daß Einrichtungen (11a, 11b, 12a, 12b) vorgesehen sind, um kalte und heiße Luft aus verschiedenen Stufen des Verdichters oder der Turbine zu entnehmen und diese Entnahmen umzuschalten, damit durch die entsprechenden gelochten Bleche (5A, 5B, 15A, 15B, 15C) hindurch zu Beginn jedes Beschleunigungsvorgangs kalte Luft auf den Nabenkranz (1a) der Scheibe und heiße Luft auf ihren inneren verdickten Abschnitt (1c) und bei jedem Verzögerungsvorgang heiße Luft auf den Nabenkranz (1a) und kalte Luft auf den inneren Abschnitt (1c) gerichtet ist, wobei die Anzahl, die Verteilung und die Abmessungen der Lufteinblaslöcher so gewählt sind, daß in jeder Betriebsphase der Temperaturgradient der entsprechenden Seite der Scheibe (1) in radialer Richtung weitestmöglich herabgesetzt ist.

2. Vorrichtung nach Anspruch 1, dadurch gekennzeichnet, daß eine Verteilungskammer (9) auf der der Scheibe (1) abgewandten Seite mindestens bestimmter gelochter Bleche (5A, 5B, 15A, 15B, 15C) angeordnet ist.

3. Vorrichtung nach Anspruch 2, dadurch gekennzeichnet, daß die Verteilungskammer (9), die hinter dem gelochten Blech (5A) angeordnet ist, durch im wesentlichen in Umfangsrichtung liegende Trennwände (14) in mehrere selbständige Kammern unterteilt ist, die in radialer Richtung der Scheibe gestaffelt und mit Luftströmen jeweils unterschiedlicher Temperatur beschickbar sind.

4. Vorrichtung nach einem der Ansprüche 1 bis 3, dadurch gfekennzeichnet, daß mindestens ein feststehendes gelochtes Blech (5A oder 5B) gegenüber jeder Seite des Nabenkranzes (1a) der Scheibe (1) angebracht ist.

5. Vorrichtung nach einem der Ansprüche 1 bis 4, dadurch gekennzeichnet, daß gelochte Bleche (15A, 15B, 15C), die jeweils den verdickten Innenabschnitt (1c) der Scheibe (1) umschließen, so angebracht sind, daß sie mit der Scheibe starr verbunden sind und mit Luft auf dem Zwischenraum zwischen der Verdichtertrommel (3) und dem Zentralrohr (4) versorgt werden, das die Bohrung (1d) der Scheibe (1) durchsetzt.

FIG:1

FIG: 2